# EUROPEAN PATENT SPECIFICATION

(11) **EP 3 795 876 B1**
(45) Date of publication and mention of the grant of the patent: **31.05.2023**
(21) Application number: 19306171.0
(22) Date of filing: 23.09.2019
(51) Int. Cl.: F16L 3/26, F16L 57/02, E21B 17/01, F16L 3/015, F16L 1/12

(54) **BEND RESTRICTOR FOR A FLEXIBLE MEMBER, IN PARTICULAR AN UNDERWATER CABLE**
BIEGEBEGRENZER FÜR EIN FLEXIBLES ELEMENT, INSBESONDERE FÜR EINEN IM MEER VERLEGENEN KABEL
LIMITEUR DE FLEXION POUR UN ÉLÉMENT FLEXIBLE, EN PARTICULIER UN CÂBLE SOUS-MARIN

(43) Date of publication of application: 24.03.2021
(73) Proprietor: Carrier Kheops Bac, 72700 Allonnes (FR)
(72) Inventor: CADORET, Yves, 72000 Le Mans (FR); CHATAIN, Adrien, 72470 Champagne (FR)
(74) Representative: Grünecker Patent- und Rechtsanwälte PartG mbB

(56) References cited:
- EP-A1- 1 213 522
- EP-A2- 2 602 530
- GB-A- 2 566 480

## Description

The invention relates to a bend restrictor for a flexible member, in particular an underwater cable.

Bend restrictors are used to restrict the bending radius of the flexible member in order to avoid damage to the flexible member. They are used, for example, for underwater cables.

Some known bend restrictors are difficult to assemble and provide low stability.

EP 2 602 530 A2 shows a bend restrictor comprising at least two base elements each being monolithic and having a feedthrough for the flexible member, a connection assembly comprising two parts for connecting the two base elements, wherein at least one of the base elements is rotatable relative to the connection assembly; and a fixation element for fixing the two parts of the connection assembly to each other.

It is the object of the invention to provide a bend restrictor that is easy to assemble and provides high stability.

According to the invention, this is achieved when the fixation element comprises a closed sleeve section for fixing the two parts of the connection assembly to each other.

Such a bend restrictor can be easily assembled and provides good stability.

The solution according to the invention can further be improved by the following further developments and advantageous developments, which are independent of each other and can be combined arbitrarily, as desired.

In particular, the connection assembly can be automatically fixed to the base elements when the fixation element fixes the two parts of the connection assembly to each other. This can simplify the handling.

In order to achieve a good force distribution, the two parts of the connection assembly can be connectable or connected to opposite sides of the base elements.

The closed sleeve section can extend around a circumference of the two parts of the connection assembly. The closed sleeve section can be integral or monolithic to achieve good stability. The fixation element can in particular only be a single monolithic element to allow an easy production and to achieve good stability.

The fixation element can be adapted for receiving the two parts of the connection assembly. For example, the closed sleeve section can have a cylindrical inner surface. In particular, the closed sleeve section can have a circular cylindrical inner surface to allow for easy mounting.

The connection assembly can have a complementary cylindrical outer surface, in particular a circular cylindrical outer surface. This can improve the stability and reduce the volume.

In an advantageous embodiment, the closed sleeve section can be moved into its final position over the rest of the bend restrictor. This can make the mounting process easy. In order to achieve such a movability, the rest of the bend restrictor can for example have a cross-section perpendicular to a mounting path of the fixation element that does not exceed an inner cross section of the fixation element. In a simpler version, only a part of the bend restrictor has such a cross section such that the fixation element can be moved over the bend restrictor only from one side.

The fixation element and the connection assembly can be held to each other by holding means. For example, screws, bolts and/or holes can be present. The holding means can in particular be removable in order to allow for easy mounting and/or repair. The stability can be improved when the holding means are located outside a force flow between the two base elements.

In a further advantageous embodiment, the fixation element is located outside a force flow between two base elements. The force flow can go through the connection assembly such that the force is absorbed by the connection assembly but not by the fixation element.

In order to achieve high flexibility, the connection assembly can be rotatable relative to both base elements.

In an advantageous embodiment, at least one base element comprises bearing parts for making a rotatable connection to the connection element. Corresponding mating bearing parts can be present on the connection element.

In order to achieve a simple configuration, the bearing parts can be integral with the base element. The bearing parts can be permanently attached to the base element. In particular, the bearing parts can be materially connected with the rest of the base element and/or be one piece with the rest of the base element.

For achieving a good force distribution, two bearing parts for connecting to one connection assembly can be located on opposing sides of the base element. In particular, two bearing parts for connecting to one connection assembly can be located on opposing ends of the base element. In a further embodiment, one base element comprises two pairs of bearing parts that are adapted for rotatable connection around two axes that are 90 degrees to each other. With this, the bend restrictor can allow a bending in more than one direction. In other words, the planes of rotations associated with the two pairs of bearing parts are 90 degrees to each other. In particular, each axis can be 90 degrees to a feedthrough direction to allow an easy operation.

In order to achieve a good force transfer along a connection direction without twisting, the two parts of the connection assembly can comprise form-fitting elements for blocking a relative movement between the two parts along the connection direction. The connection direction can be a direction of a line connecting two mating bearing elements on one part and generally extend along an extension direction of the flexible member along which the base elements are arranged behind each other. The connection direction can be parallel to the direction in which the feedthrough runs through the base element, at least in a non-bent state.

In an advantageous embodiment, the two parts of the connection assembly comprise two pairs of mating bearing parts that are adapted for rotatable connection around two axes that are parallel to each other. This can allow an easy rotation in a single plane with a small radius.

In an alternative embodiment, the two parts of the connection assembly can comprise two pairs of mating bearing parts that are adapted for rotatable connection around two axes that are 90 degrees to each other. This allows a movability of the bend restrictor in two dimensions. In other words, the planes of rotations associated with the two pairs of mating bearing parts are 90 degrees to each other.

The production can be simplified and the stability can be improved when each base element is monolithic. In particular, the bearing parts can be integral with the rest of the base element.

In a simple configuration, at least one bearing part can be a plane surface interacting with a mating plane surface.

Easy handling can be possible when at least one base element is substantially box-shaped. The box shape can relate to a main body of the base element and, for example, protruding pins can protrude away from this main body. The base element can be substantially prismatic or cuboid.

Alternatively, at least one base element can have another shape and, for example, be cylindrical or partially spherical. Such an embodiment can be particularly space-saving.

In a simple configuration, the bearing parts can be pins. In particular, the pins can be cylindrical to allow an easy rotation. The mating bearing parts can be holes, in particular circular holes, or other types of receptacles. An inverse configuration with pins as the mating bearing parts and holes as the bearing parts is of course also possible.

To achieve good relative movability, one base element can comprise two pairs of bearing parts that are adapted for connecting to two different connection assemblies, wherein the two pairs are shifted to each other along a connection direction or a feedthrough direction.

In an easy to produce embodiment, the at least two base elements are configured identically.

Similarly, the two parts of the connection assembly can be configured identically.

To avoid damage to the flexible member, the bend restrictor can comprise stop faces for limiting the degree of bending. The stop faces can be located at the connection assembly, the fixation element, and/or the base element.

The connection assembly can provide a direct connection between the base elements in order to improve the stability. Each of the two parts can be directly connected to two base elements. Direct connection here means that no intermediate elements like fixation elements are present between the base element and the part of the connection assembly.

At least some of the part of the bend restrictor can made from metal in order to achieve a high stability. For example, the fixation element can be made from metal. Other parts can be made from other materials, for example from plastic in order to save weight and costs.

The bend restrictor can further comprise an attachment member for attaching the bend restrictor to an external element, like a boat. The attachment member can be adapted to be connected to the connection assembly in order to take up forces efficiently. The connection assembly can be rotatable relative to the attachment member.

The attachment member can comprise a flange to allow a safe connection to the external member. Pins, bolt, screws or other fixing means can be used to attach the attachment member to the external member. The attachment member can comprise at least one hole for receiving the fixing member.

In an advantageous development, the bend restrictor can comprise a predetermined breaking point in order to avoid that too high forces acting on the one side can lead to damages on the other side of the bend restrictor. The predetermined breaking point can for example comprise at least one groove or other weakening structure on the parts of the connection assembly. This reduction in the material thickness creates a weak point in the chain and allows to break the bend restrictor and as a consequence the cable in case of too high loads. For example, if the cable and the bend restrictor are dragged behind a boat and the cable and the bend restrictor get stuck in a fixed structure, the bend restrictor can break at the predetermined breaking point. Subsequently, the cable can break due to the too high forces acting on it. A damage to the boat can then be avoided.

The invention will now be described in greater detail and in an exemplary manner using advantageous embodiments and with reference to the drawings. The described embodiments are only possible configurations in which, however, the individual features as described above can be provided independently of one another or can be omitted.

In the figures:

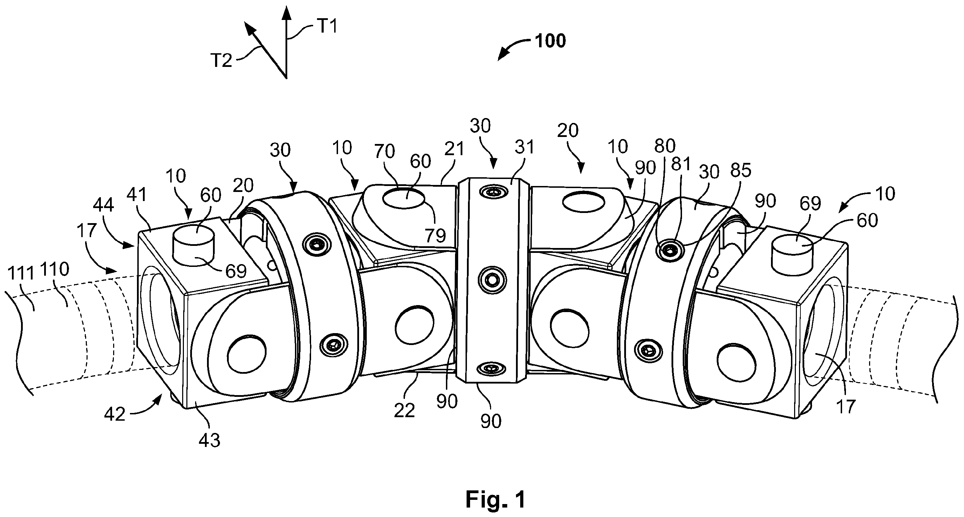

Fig. 1 shows a schematic perspective view of an embodiment of a bend restrictor;
Fig. 2 shows a schematic perspective view of a first step of a mounting process for the embodiment shown in fig. 1;
Fig. 3 shows a schematic perspective view of a second step of a mounting process for the embodiment shown in fig. 1;
Fig. 4 shows a schematic perspective view of a third step of a mounting process for the embodiment shown in fig. 1;
Fig. 5 shows a schematic perspective view of a fourth step of a mounting process for the embodiment shown in fig. 1;
Fig. 6 shows a schematic perspective view of a bend restrictor comprising attachment members;
Fig. 7 shows a schematic perspective view of parts of a further bend restrictor comprising a predetermined breaking point;
Fig. 8 shows a schematic perspective view of a bend restrictor comprising a predetermined breaking point.

In the figures, a bend restrictor 100 for a flexible member 110, in particular an underwater cable 111 is shown. Such bend restrictors 100 are used to protect the flexible member, in particular from bending below a certain radius that would damage the flexible member 110. Further, forces for pulling the flexible member 1 10 or elements attached to it like plugs can be transmitted through the bend restrictor 100. The flexible member 110 is only shown schematically in broken lines.

The bend restrictor 100 shown in the figures comprises several base elements 10 each having a feedthrough 17 through which the flexible member 110 can extend along a feedthrough direction F.

Further, several connection assemblies 20 each connecting two base elements 10 are present. Each of the base elements 10 is rotatable relative to the two attached connection assemblies 20.

Each of the connection assemblies 20 comprises two parts, namely a first part 21 and a second part 22. The two parts 21, 22 are connected to opposite sides of the base elements 10, for example to an upper side 41 and a lower side 42 or to a front 43 and a to back 44 of the base element 10.

In the depicted example, the two parts 21, 22 are embodied identically in order to simplify the production process. Further, the two base elements 10, 11, 12 are embodied identically.

Each of the parts 21, 22 comprises two holes 79 that serve as mating bearing parts 70 for engagement with the bearing parts 60 located on the base elements 10.

The bearing parts 60 are formed as pins 69 that protrude from the rest of the base element 10 and are integral or one-piece with the rest of the base element 10 in order to have a solid connection. Thus, the base element 10 and the connection assembly 20 are connected directly to each other without intermediate elements like fixing elements. A force applied for example when pulling on the bend restrictor 100 along the feedthrough directions F, can only act on the base elements 10 and the connection assemblies 20 but not on further elements. In particular, a connection between the two holes 70 in one part 21, 22 runs along a straight line so that no twisting of the part 21, 22 of the connection assembly 20 is to be expected.

The bend restrictor 100 further comprises a fixation element 30 for fixing the two parts 21, 22 of the connection assembly 20 to each other. The fixation element 30 in particular comprises a closed sleeve section 31 that is ring-shaped. The two parts 21, 22 can be inserted sideways into the closed sleeve section 31, for example along a feedthrough direction F and then be held in the closed sleeve section 31 such that no movement perpendicular to the feedthrough direction F is possible. In particular, wing sections 33 on the parts 21, 22 of the connection assembly 20 engaging the closed ring section 31 prevent a movement perpendicular to the feedthrough directions F or the connection direction C.

The closed sleeve section 31 comprises an inner surface 39 that is complimentary to an outer surface 29 of the connection assembly 20. The outer surface 29 and the inner surface 39 are each circular cylindrical to allow an easy assembly. The outer surface 29 is at least partially located on the wing sections 33.

The closed sleeve section 31 is integral or monolithic. The fixation element 30 is a single monolithic element.

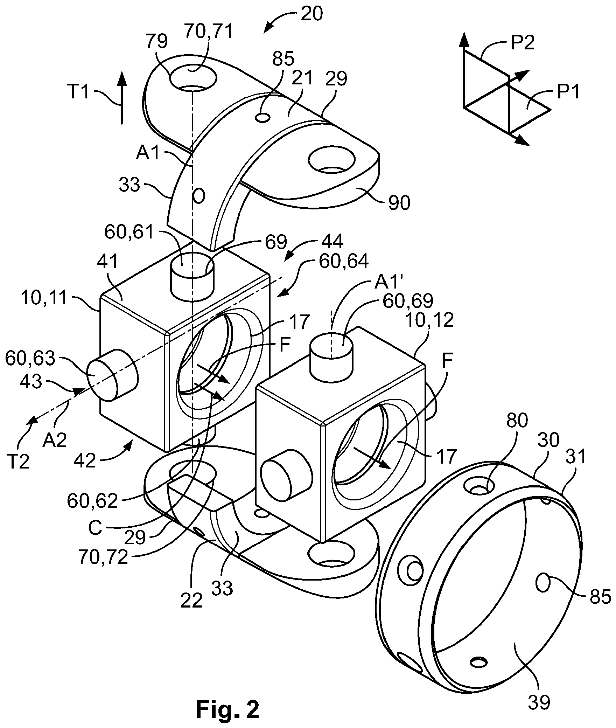

In figs. 2 to 5, further details of the bend restrictor 1 and in particular of its assembly can be seen.

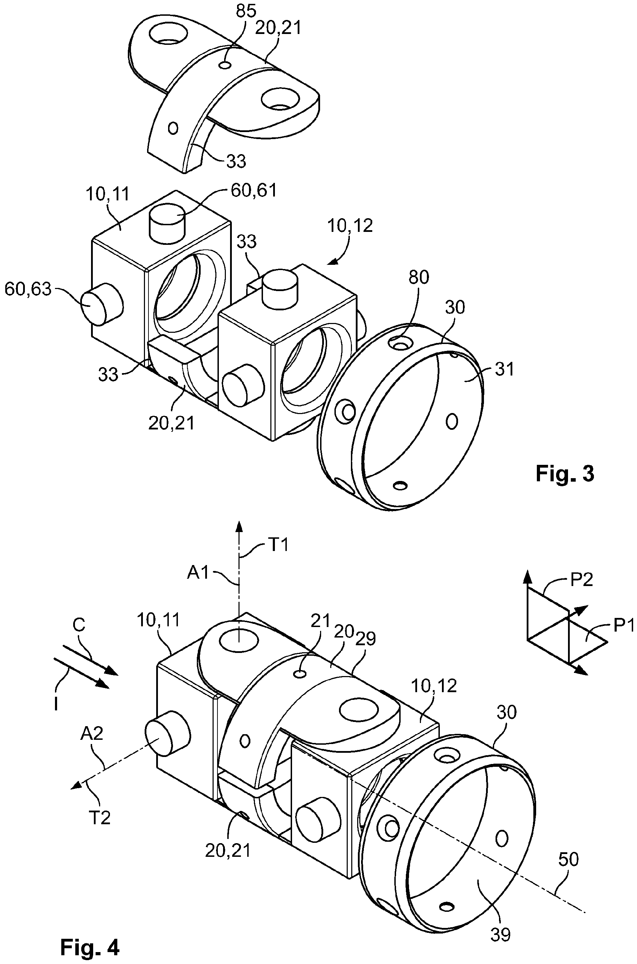

Between figs. 2 and 4, the second part 22 and the first part 21 are connected to two base elements 10, 11, 12.

Exemplarily, the connection to the first base element 10, 11 is explained. Similar considerations apply for the second base element 10, 12.

The first base element 10, 11 is connected to the first part 21 of the connection assembly 20 at an upper side 41 of the base element 41 via the first bearing part 60, 61 in the form of a pin 69 on the first base element 10, 11 and a corresponding first mating bearing part 70, 71 in the form of a hole 79 in the first part 21.

At the opposite side, namely a lower side 42, the first base element 10, 11 is connected to the second part 22 of the connection assembly 20 via the second bearing part 60, 62 in the form of a pin 69 on the first base element 10, 11 and a corresponding second mating bearing part 70, 72 in the form of a hole 79 in the second part 22.

The first base element 10, 11 can thus rotate relative to the connection assembly 20 around a first axis A1.

The first base element 10, 11 comprises two further bearing parts 60, namely a third bearing part 63 and a forth bearing part 64 which are located on two opposing sides namely a front 43 and a back 44 of the first base element 10, 11. This allows a rotation around a second axis A2 that is perpendicular to the first axis A1. The base element can thus rotate in a first plane P1 that is perpendicular to the first axis A1 and in a second plane P2 that is perpendicular to the second axis A2 and perpendicular to the first plane P1. This allows a multidimensional movement of the bend restrictor 100.

The two pairs of pins 69 that form the bearing parts 60 are shifted to each other along the feedthrough direction F which in a relaxed state is parallel to a connection direction C between the two holes 79 in one of the parts 21, 22. A higher flexibility is achieved by this shifting.

The pin 69 of the first bearing part 61 protrudes away from the base element 10, 11 along a first transverse direction T1. The pin 69 of the second bearing part 62 protrudes away from the base element 10, 11 counter to the first transverse direction T1.

The pin 69 of the third bearing part 63 protrudes away from the base element 10, 11 along a second transverse direction T2. The pin 69 of the forth bearing part 64 protrudes away from the base element 10, 11 counter to the second transverse direction T2. The second transverse direction T2 is perpendicular to the first transverse direction T1.

Each of the pins 69 is configured as a circular cylindrical stud in order to engage a corresponding circular cylindrical hole 79.

When the two parts 21, 22 are attached to the two base elements 10, 11, 12, the fixation element 30 is moved over the resulting assembly. The outer dimensions of this resulting assembly is such that the closed sleeve section 31 can be moved into its final position over the rest of the bend restrictor 100.

For example, the resulting assembly which can be the rest of the bend restrictor 100, has a cross-section perpendicular to a mounting path 50 of the fixation element 30 that does not exceed an inner cross section of the fixation element 30. The fixation element 30 restricts the movement of the connection assembly 20 and in particular of the two parts 21, 22 of the connection assembly 20 in particular in the two transverse directions T1, T2. The fixation element 30 fixes the connection assembly 20 to the base elements 10, 11, 12.

In order to hold the fixation element 30 in place, holding means 80 like screws 81 and holes 85 can be used. This connection is reversible so that the bend restrictor 100 can be repaired.

The holding means 80 are located outside a force flow between the two base elements 10, 11, 12. Thus, the holding means 80 do not have to be large.

In the shown example, the two parts 21, 22 of the connection assembly 20 comprise two pairs of mating bearing parts 70, 71, 72 that are adapted for rotatable connection around two axes A1, A1' that are parallel to each other, with the axes A1' being associated with the second base element 10, 12.

In a non-depicted embodiment, the two parts 21, 22 of the connection assembly 20 could comprise two pairs of mating bearing parts that are adapted for rotatable connection around two axes that are 90 degree to each other.

In a further, non-depicted embodiment, the two parts 21, 22 of the connection assembly 20 could comprise form fitting elements for blocking a relative movement between the two parts 21, 22 along a connection direction C or a feedthrough direction F.

In the depicted embodiment, the base elements 10, 11, 12 are, except for the protruding pins, substantially box-shaped. In other embodiments, the general outer shape could be prismatic, cuboid, cylindrical or partially spherical for example if the flexibility should be increased.

The bend restrictor 100 further comprises stop faces 90 for limiting the degree of bending. The stop faces 90 are located at the connection assembly 20 and the fixation element 30, but could also be located on the base elements 10.

At least some of the part of the bend restrictor 100 can made from metal in order to achieve a high stability. For example, the fixation element 30 can be made from metal. Other parts can be made from other materials, for example from plastic in order to save weight and costs.

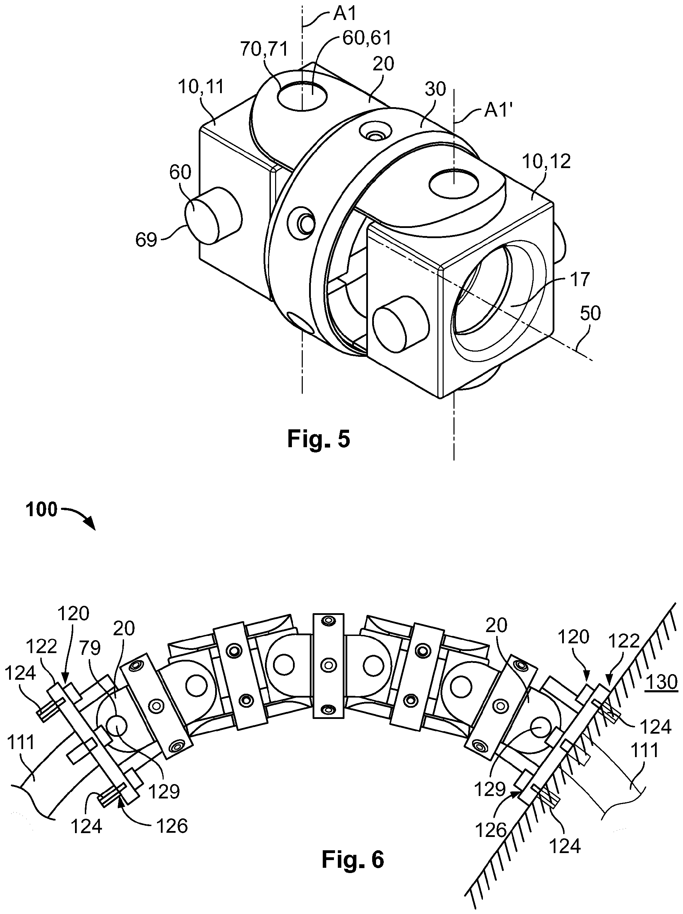

The bend restrictor 100 in Fig. 6 further comprises two attachment members 120 for attaching the bend restrictor 100 to an external element 130, like a boat, that is only shown schematically. Each attachment member 120 is adapted to be connected to the connection assembly 20 on one side in order to take up forces efficiently. In particular, the attachment member 120 can be rotated relative to the connection assembly 20 to which it is attached. The attachment member 120 can comprise a pin 129 that cooperates with a hole 79 in the connection assembly 20.

Further, each attachment member 120 comprises a flange 122 on the other side to allow a safe connection to the external member 130. Pins 124 or other fixing means can be used to attach the attachment member 120 to the external member 130. The attachment member 120 can comprise at least one hole 126 for receiving the fixing member. The cable 111 can be feed through a hole in the external element 130 that can be sealed by the attachment member 120, in particular by the flange 122.

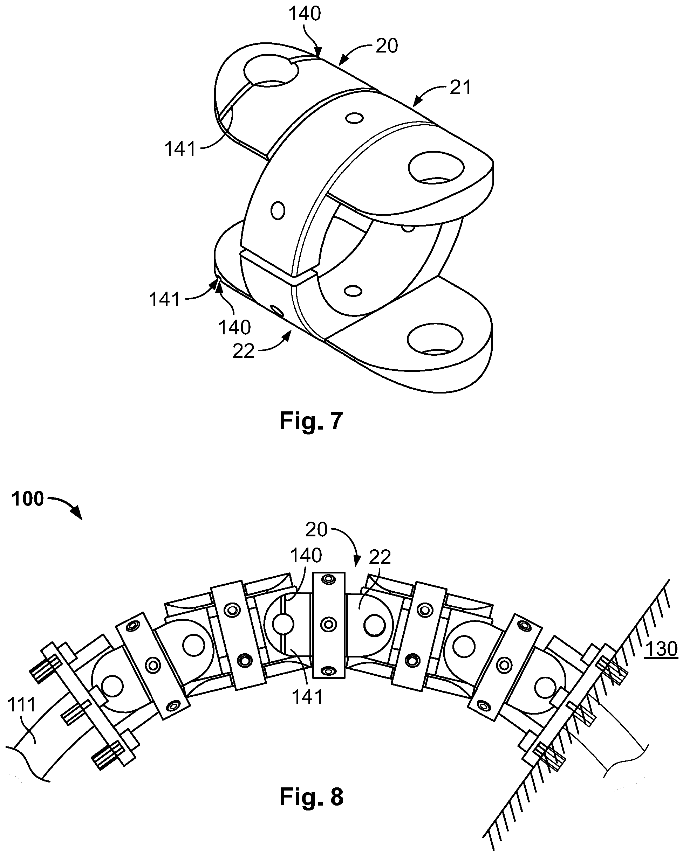

In Figs. 7 and 8, an advantageous development is shown which comprises a predetermined breaking point 140 in order to avoid that too high forces acting on the one side can lead to damages on the other side of the bend restrictor 100. The predetermined breaking point 140 comprises grooves 141 on the parts 21, 22 of the connection assembly 20. This reduction in the material thickness creates a weak point in the chain and allows to break the bend restrictor 100 and as a consequence the cable 111 in case of too high loads. For example, if the cable 111 and the bend restrictor 100 are dragged behind a boat and the cable 111 and the bend restrictor 100 get stuck in a fixed structure, the bend restrictor 100 can break at the predetermined breaking point 140. Subsequently, the cable 111 can break due to the too high forces acting on it. A damage to the boat can then be avoided.

### REFERENCE NUMERALS

10 base element
11 first base element
12 second base element
17 feedthrough
20 connection assembly
21 first part
22 second part
29 outer surface
30 fixation element
31 closed sleeve section
33 wing section
39 inner surface
41 upper side
42 lower side
43 front
44 back
50 mounting path
60 bearing part
61 first bearing part
62 second bearing part
63 third bearing part
64 fourth bearing part
69 pin
70 mating bearing part
71 first mating bearing part
72 second mating bearing part
73 third mating bearing part
74 fourth mating bearing part
79 hole
80 holding means
81 screw
85 hole
90 stop face
100 bend restrictor
110 flexible member
111 cable
120 attachment member
122 flange
124 pin
126 hole
129 pin
130 external element
140 predetermined breaking point
141 groove
A1 first axis
A2 second axis
A1' axis on second base element
C connection direction
F feedthrough direction
P1 first plane
P2 second plane
T1 first transversal direction
T2 second transversal direction

## Claims

1. Bend restrictor (100) for a flexible member (110) , in particular an underwater cable (111), the bend restrictor (100) comprising
at least two base elements (10, 11, 12) each being monolithic and having a feedthrough (17) for the flexible member (110),
a connection assembly (20) comprising two parts (21, 22) for connecting the two base elements (10, 11, 12), wherein at least one of the base elements (10, 11, 12) is rotatable relative to the connection assembly (20); and
a fixation element (30) for fixing the two parts (21, 22) of the connection assembly (20) to each other,
**characterized in that** the fixation element (30) comprises a closed sleeve section (31) for fixing the two parts (21, 22) of the connection assembly (20) to each other.

2. Bend restrictor (100) according to claim 1, wherein the two parts (21, 22) are connectable to opposite sides (41, 42) of the base elements (10, 11, 12).

3. Bend restrictor (100) according to one of claims 1 or 2, wherein the closed sleeve section (31) has a cylindrical inner surface (39).

4. Bend restrictor (100) according to one of claims 1 to 3, wherein the closed sleeve section (31) can be moved into its final position over the rest of the bend restrictor (100).

5. Bend restrictor (100) according to one of claims 1 to 4, wherein at least one base element comprises bearing parts for making a rotatable connection to the connection assembly (20).

6. Bend restrictor (100) according to one of claims 1 to 5, wherein two bearing parts (60, 61, 62) for connecting to one connection assembly (20) are located on opposing sides (41, 42) of the base element (10, 11, 12).

7. Bend restrictor (100) according to one of claims 1 to 6, wherein one base element (10, 11, 12) comprises two pairs of bearing parts (60, 61, 62, 63, 64) that are adapted for rotatable connection around two axes (A1, A2) that are 90 degrees to each other.

8. Bend restrictor (100) according to one of claims 1 to 7, wherein at least one base element (10, 11, 12) is substantially box-shaped.

9. Bend restrictor (100) according to one of claims 1 to 8, wherein the bearing parts (60, 61, 62, 63, 64) are pins (69).

10. Bend restrictor (100) according to one of claims 1 to 9, wherein one base element (10, 11, 12) comprises two pairs of bearing parts (60, 61, 62, 63, 64) that are adapted for connecting to two different connection assemblies (20) and the two pairs are shifted to each other along a feedthrough direction (F).

11. Bend restrictor (100) according to one of claims 1 to 10, wherein the at least two base elements (10, 11, 12) are configured identically.

12. Bend restrictor (100) according to one of claims 1 to 11, wherein the two parts (21, 22) of the connection assembly (20) are configured identically.

13. Bend restrictor (100) according to one of claims 1 to 12, further comprising at least one attachment member (120) adapted to attach the bend restrictor (100) to an external element (130).

## Patentansprüche

1. Knickschutz (100) für ein flexibles Element (110), insbesondere ein Unterwasserkabel (111), wobei der Knickschutz (100) umfasst:
wenigstens zwei Basiselemente (10, 11, 12), jeweils aus einem Teil bestehend und mit einer Durchführung (17) für das flexible Element (110),
eine Verbindungsanordnung (20), umfassend zwei Teile (21, 22) zum Verbinden der zwei Basiselemente (10, 11, 12), wobei wenigstens eines der Basiselemente (10, 11, 12) in Bezug auf die Verbindungsanordnung (20) drehbar ist; und
ein Befestigungselement (30) zum Befestigen der zwei Teile (21, 22) der Verbindungsanordnung (20) aneinander,
**dadurch gekennzeichnet, dass** das Befestigungselement (30) einen geschlossenen Hülsenabschnitt (31) zum Befestigen der zwei Teile (21, 22) der Verbindungsanordnung (20) aneinander umfasst.

2. Knickschutz (100) nach Anspruch 1, wobei die zwei Teile (21, 22) mit gegenüberliegenden Seiten (41, 42) der Basiselemente (10, 11, 12) verbindbar sind.

3. Knickschutz (100) nach Anspruch 1 oder 2, wobei der geschlossene Hülsenabschnitt (31) eine zylindrische Innenfläche (39) aufweist.

4. Knickschutz (100) nach einem der Ansprüche 1 bis 3, wobei der geschlossene Hülsenabschnitt (31) in seine Endposition über den Rest des Knickschutzes (100) bewegt werden kann.

5. Knickschutz (100) nach einem der Ansprüche 1 bis 4, wobei wenigstens ein Basiselement Trageteile zum Herstellen einer drehbaren Verbindung mit der Verbindungsanordnung (20) umfasst.

6. Knickschutz (100) nach einem der Ansprüche 1 bis 5, wobei zwei Trageteile (60, 61, 62) zum Verbinden mit einer Verbindungsanordnung (20) an gegenüberliegenden Seiten (41, 42) des Basiselements (10, 11, 12) angeordnet sind.

7. Knickschutz (100) nach einem der Ansprüche 1 bis 6, wobei ein Basiselement (10, 11, 12) zwei Paare von Trageteilen (60, 61, 62, 63, 64) umfasst, die für eine drehbare Verbindung um zwei Achsen (A1, A2), die 90 Grad zueinander aufweisen, angepasst sind.

8. Knickschutz (100) nach einem der Ansprüche 1 bis 7, wobei wenigstens ein Basiselement (10, 11, 12) im Wesentlichen kastenförmig ist.

9. Knickschutz (100) nach einem der Ansprüche 1 bis 8, wobei die Trageteile (60, 61, 62, 63, 64) Stifte (69) sind.

10. Knickschutz (100) nach einem der Ansprüche 1 bis 9, wobei ein Basiselement (10, 11, 12) zwei Paare von Trageteilen (60, 61, 62, 63, 64) umfasst, die für eine Verbindung mit zwei verschiedenen Verbindungsanordnungen (20) angepasst sind, und die zwei Paare zueinander entlang einer Durchführrichtung (F) verschoben sind.

11. Knickschutz (100) nach einem der Ansprüche 1 bis 10, wobei die wenigstens zwei Basiselemente (10, 11, 12) identisch ausgebildet sind.

12. Knickschutz (100) nach einem der Ansprüche 1 bis 11, wobei die zwei Teile (21, 22) der Verbindungsanordnung (20) identisch ausgebildet sind.

13. Knickschutz (100) nach einem der Ansprüche 1 bis 12, ferner umfassend wenigstens ein Befestigungselement (120), angepasst zum Befestigen des Knickschutzes (100) an einem externen Element (130).

## Revendications

1. Limiteur de courbure (100) pour un organe flexible (110), en particulier un câble sous-marin (111), le limiteur de courbure (100) comprenant
au moins deux éléments de base (10, 11, 12) qui sont chacun monolithique et comportant un passage (17) pour l'organe flexible (110),
un ensemble de connexion (20) comportant deux parties (21, 22) pour connecter les deux éléments de base (10, 11, 12), dans lequel au moins l'un des éléments de base (10, 11, 12) peut tourner par rapport à l'ensemble de connexion (20) ; et
un élément de fixation (30) pour fixer les deux parties (21, 22) de l'ensemble de connexion (20) l'une à l'autre,
**caractérisé en ce que** l'élément de fixation (30) comprend une section de manchon fermée (31) pour fixer les deux parties (21, 22) de l'ensemble de connexion (20) l'une à l'autre.

2. Limiteur de courbure (100) selon la revendication 1, dans lequel les deux parties (21, 22) peuvent être connectées à des côtés opposés (41, 42) des éléments de base (10, 11, 12).

3. Limiteur de courbure (100) selon l'une des revendications 1 et 2, dans lequel la section de manchon fermée (31) présente une surface intérieure cylindrique (39) .

4. Limiteur de courbure (100) selon l'une des revendications 1 à 3, dans lequel la section de manchon fermée (31) peut être déplacée dans sa position finale sur le reste du limiteur de courbure (100).

5. Limiteur de courbure (100) selon l'une des revendications 1 à 4, dans lequel au moins un élément de base comprend des parties de palier pour établir une connexion rotative avec l'ensemble de connexion (20).

6. Limiteur de courbure (100) selon l'une des revendications 1 à 5, dans lequel deux parties de palier (60, 61, 62) pour une connexion à un ensemble de connexion (20) sont situées sur des côtés opposés (41, 42) de l'élément de base (10, 11, 12).

7. Limiteur de courbure (100) selon l'une des revendications 1 à 6, dans lequel un élément de base (10, 11, 12) comprend deux paires de parties de palier (60, 61, 62, 63, 64) qui sont adaptées pour une connexion rotative autour de deux axes (A1, A2) qui sont à 90 degrés l'un par rapport à l'autre.

8. Limiteur de courbure (100) selon l'une des revendications 1 à 7, dans lequel au moins un élément de base (10, 11, 12) présente substantiellement une forme de boîte.

9. Limiteur de courbure (100) selon l'une des revendications 1 à 8, dans lequel les parties de palier (60, 61, 62, 63, 64) sont des broches (69).

10. Limiteur de courbure (100) selon l'une des revendications 1 à 9, dans lequel un élément de base (10, 11, 12) comprend deux paires de parties de palier (60, 61, 62, 63, 64) qui sont adaptées pour se connecter à deux ensembles de connexion différents (20) et les deux paires sont décalées l'une par rapport à l'autre selon une direction de passage (F).

11. Limiteur de courbure (100) selon l'une des revendications 1 à 10, dans lequel lesdits au moins deux éléments de base (10, 11, 12) sont configurés de manière identique.

12. Limiteur de courbure (100) selon l'une des revendications 1 à 11, dans lequel les deux parties (21, 22) de l'ensemble de connexion (20) sont configurées de manière identique.

13. Limiteur de courbure (100) selon l'une des revendications 1 à 12, comprenant en outre au moins un élément d'attache (120) adapté pour attacher le limiteur de courbure (100) à un élément externe (130).
